# EUROPÄISCHE PATENTSCHRIFT

(11) **EP 0 779 096 B1**
(45) Veröffentlichungstag und Bekanntmachung des Hinweises auf die Patenterteilung: **05.02.2003**
(21) Anmeldenummer: 96117580.9
(22) Anmeldetag: 02.11.1996
(51) Int. Cl.: B01D 53/94, B01J 23/00

(54) **Verfahren und Anlage zur katalytischen Gasreinigung**
Process and device for catalytic gas purification
Procédé et dispositif pour la purification catalytique de gaz

(30) Priorität: 13.12.1995 DE 19546482
(43) Veröffentlichungstag der Anmeldung: 18.06.1997
(73) Patentinhaber: DaimlerChrysler AG, 70567 Stuttgart (DE); BASF AKTIENGESELLSCHAFT, 67056 Ludwigshafen (DE)
(72) Erfinder: Hartweg, Martin, Dr., 89153 Erbach (DE); Roitzheim, Rolf-Dirc, Dr., 89160 Dornstadt (DE); Seibold, Andrea, 89134 Blaustein (DE); Walz, Leonhard, Dr., 76437 Rastatt (DE); Fetzer, Thomas, Dr., 67346 Speyer (DE); Morsbach, Bernd, 67069 Ludwigshafen (DE)

(56) Entgegenhaltungen:
- EP-A- 0 148 358
- EP-A- 0 283 913
- EP-A- 0 494 388
- EP-A- 0 676 232
- DE-A- 4 214 183

## Beschreibung

Die Erfindung betrifft ein Verfahren zum Betreiben einer Reinigungsanlage für strömende Abgasen von Dieselmotoren, bei welchem Verfahren ein fluidisch durchströmbarer und aus einem Katalysator gefertigter Filterkörper dem Gasstrom ausgesetzt wird, wobei als Katalysator ein Spinell gewählt ist, bei welchem Verfahren ferner dem Abgas vor dem Eintritt in den Katalysator als Reduktionsmittel Kohlenwasserstoff beigegeben wird, und bei welchem Verfahren dem strömenden Gas - in Strömungsrichtung des Gases betrachtet - nach einer bestimmten von dem zu reinigenden Gas in dem Katalysator des Filterkörpers durchströmten Behandlungsstrecke erneut Kohlenwasserstoff zugegeben und der Kontakt mit dem Katalysator des Filterkörpers aufrechterhalten wird, gemäß dem Anspruch 1 sowie eine Reinigungsanlage Durchführung des Verfahrens mit einem im Gasstrom angeordneten und durchströmbaren Filterkörper, welcher Filterkörper aus einem Spinell als Katalysator gefertigt ist, ferner mit einer ersten Zuführeinrichtung vor dem Katalysator für als Reduktionsmittel verwendeten Kohlenwasserstoff sowie mit einer zweiten Zuführeinrichtung für Kohlenwasserstoff, welche nach einer bestimmten von dem zu reinigenden Gas in dem Katalysator des Filterkörpers (2) durchströmten Behandlungsstrecke angeordnet ist, gemäß dem Anspruch 3, wie beides in der Automobiltechnik zur Schadstoffverringerung verwendet und hier als bekannt unterstellt wird.

Aus der DE 42 14 183 A ist ein Verfahren zum Betreiben einer Reinigungsanlage für strömende Gase bekannt, bei dem ein fluidisch durchströmbarer sowie aus einem Katalysator zur selektiven katalytischen Reduktion von Stickoxiden gefertigter Filterkörper einem Gasstrom ausgesetzt wird. Dem Gas wird vor dem Katalysator ein Reduktionsmittel beigegeben. Des weiterem wird dem Gas nach einer bestimmten Behandlungsstrecke erneut ein Reduktionsmittel beigegeben.

Aus der EP 148 358 ist ein Verfahren zum Betreiben einer Reinigungsanlage für strömende Gase bekannt, bei dem ein aus einem DeNOx-Katalysator gefertigter Filterkörper, bestehend aus einem MgAl₂O₄-Spinell, dem Gasstrom ausgesetzt wird, und bei dem dem Gas vor dem Katalysator ein Reduktionsmittel beigegeben wird, wobei nach einer bestimmten Behandlungsstrecke dem Gas erneut ein Reduktionsmittel beigegeben und der Kontakt mit dem Katalysator aufrechterhalten wird.

Aus der EP 676 232 A ist die Beifügung von verschiedenen Elementen, einschließlich Pt, Pd, Rh und seltenen Erden in einem Spinell-Katalysator zur Reinigung von Gasen, die CO, HC und NOx enthalten, bekannt.

Aus der nicht vorveröffentlichten DE-P 44 20 932.0-41 ist ein Katalysator einer Reinigungsanlage für Abgase eines Dieselmotors bekannt, der aus einem Spinell gebildet ist. Der Katalysator weist eine hohe Beständigkeit gegen im Abgas vorliegende Substanzen auf. Allerdings ist die Reduktion der Stickoxide maximal auf etwa 40 % begrenzt.

Die Aufgabe der ist es, ein Verfahren zu entwickeln mit dem die Schadstoffemission erniedrigt ist. Ferner ist es Aufgabe der Erfindung eine derartige Reinigungsanlage anzugeben.

Die Aufgabe wird bei einem Verfahren mit den Verfahrensschritten des Anspruchs 1 bzw. bzgl. der Reinigungsanlage mit den Merkmalen des Anspruchs 3 gelöst. Durch die Verwendung eines Cuimprägnierten CuAl2O4-Spinells als Katalysator sowie der Beigabe des Reduktionsmittels ebenfalls vor dem Katalysator und nach der zumindest einen der Schadstoffe betreffenden Sättigung des Katalysators, kann die die gesamte Reinigungsanlage betreffende Reduktion an NOx bei Temperaturen zwischen 200 und 400 °C auf über 40% gesteigert werden.

Weitere sinnvolle Ausgestaltungen sind den Unteransprüchen entnehmbar. Des weiteren wird die Erfindung anhand von in den Figuren beschriebenen Ausführungsbeispielen nähers erläutert. Dabei zeigt
- Fig. 1: eine Reinigungsanlage mit porösem und aus dem Katalysator gefertigten sowie einen Beigabekanal für das Reduktionsmittel aufweisenden Filterkörper, und
- Fig. 2: eine mit Ringdüsen aufweisenden Zuführeinrichtung für das Reduktionsmittel,
- Fig. 3: ein NOx/CO₂-Diagramm als Funktion der Temperatur eines CuAl₂O₄ Spinells.

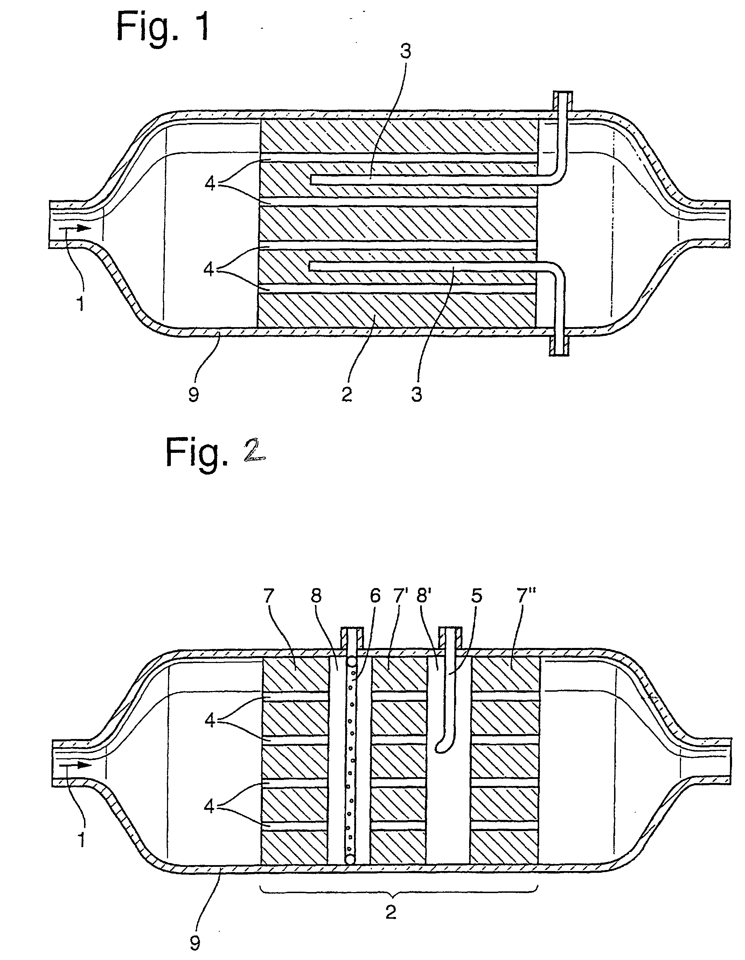

In Figur 1 ist eine Reinigungsanlage dargestellt, die in einem Auspuffstrang 9 eines Dieselmotors odereines mager betriebenen Ottomotors, der insbesondere in einem Kraftfahrzeug, bevorzugt in einem Personenkraftwagen eingebaut ist. Die Erfindung ist aber nicht nur auf Kraftfahrzeuge beschränkt, sondern kann in vielerlei Hinsicht verwandt werden, wie bspw. als Reinigungsanlage für die Abgase in Kraftwerken oder auch in der chemischen Industrie als Filter.

Der poröse Filterkörper 2 weist Durchströmkanäle 4 auf, durch die das zu reinigende Abgas hindurchströmt und die hier zur besseren Veranschaulichung als geradlinige Kanäle dargestellt sind.

Das durch einen Durchströmkanal 4 hindurchströmende Abgas weist u.a. Kohlenwasserstoffe auf, die als Reduktionsmittel für die ebenfalls im Abgas vorliegenden Stickoxide und hierbei insbesondere von NO und NO₂ dienen. Nach einer bestimmten Behandlungsstrecke sind die Kohlenwasserstoffe jedoch verbraucht, so daß der Filterkörper 2 hinsichtlich seiner katalytischen Wirkung auf die Schadstoffe gesättigt ist.

Damit innerhalb des Filterkörpers 2 der Reinigungsanlage eine weitere Reduktion der Schadstoffe möglich ist, weist der aus dem Katalysator gefertigte Filterkörper 2 zwischen zwei Durchströmkanälen 4 einen Beigabekanal 3 einer Zuführeinrichtung für das Reduktionsmittel auf. Der Beigabekanal 3 ist mit einem nichtdargestellten Reservoir der Zuführeinrichtung verbunden. Zweckmäßigerweise ist der Beigabekanal 3 über geeignete Sicherheitsmaßnahmen mit der Tankentlüftung des Kraftfahrzeugs verbunden, so daß der insbesondere der Gasraum des Tanks das Reservoir bildet.

Der sacklochartige Beigabekanal 3 ist - in Strömungsrichtung 1 des Abgases betrachtet - gaszuströmseitig verschlossen und gasabströmseitig mit dem Reservoir verbunden. Als günstige Reduktionsmittel haben sich Ammoniak und für den Gebrauch in Kraftfahrzeugen insbesondere Kohlenwasserstoffe bewährt.

Zur Zuführung von Reduziermittel strömt das Reduktionsmittel gasabströmseitig ein, und diffundiert durch den porösen und kapillarwirsamen Filterkörper 2 in die Durchströmkanäle 4 und verdampft dort, wodurch in dem bereits teilgereinigten Abgas die Konzentration des Reduziermittels erhöht wird.

Die innerhalb des Filterkörpers 2 stattfindende Erhöhung der Konzentration der Kohlenwasserstoffe bewirkt, daß die in dem vorgereinigten Abgas verbleibenden Schadstoffe während der weiteren Durchströmung des Abgases durch den Filterkörper 2 hindurch weiter reduziert werden, wodurch das Abgas in der gesamten Reinigungsanlage besser gereinigt wird. Die Schadstoffverringerung kann in vorteilhafter Weise auch hinsichtlich der Konzentration an Kohlenmonoxid und/oder an Kohlenwasserstoffe des Abgases erfolgen.

Damit die Menge des zugeführten Reduktionsmittels nicht zu groß ist, weist die Zuführeinrichtung sinnvollerweise noch eine Dosiereinrichtung ( nicht eingezeichnet ), bspw. eine volumetrische Pumpe auf, so daß die Beigabe an Reduktionsmittel exakt dosiert werden kann.

Der Beigabekanal 3 kann auch vom Außenumfang des Filterkörpers 2 beginnend quer zur Strömungsrichtung 1 des Abgases bis hin zur Mitte des Filterkörpers 2 eingebracht sein. Dieses nicht dargestellte Ausführungsbeispiel hat den Vorteil, daß mit einem einzigen Beigabekanal 3 mehrere Durchströmkanäle 4 gleichzeitig mit dem Reduziermittel beaufschlagt werden können. Des weiteren ist es hier günstig, daß der oder die Beigabekanäle 3 in einfacher Weise vom Außenumfang des Filterkörpers 2 her mit dem Reduziermittel versorgt werden können.

Bei einem porös ausgebildeten Filterkörper 2 kann in bevorzugter Weise die Zuführeinrichtung umfangsseitig am Filterkörper 2 angeordnete Düsen, insbesondere eine Ringdüse 6 aufweisen, durch die das Reduktionsmittel, bevorzugt quer zur Strömungsrichtung 1 des Abgases durch den Filterkörper 2 hindurch, ausströmbar ist. Der Transport des vorzugsweise gasförmigen Reduktionsmittels in Richtung des durch die Poren des porösen Filterkörpers 2 hindurchströmenden Abgases erfolgt ebenfalls durch die Poren des Filterkörpers 2 hindurch.

Die Beigabe des Reduziermittels erfolgt zweckmäßigerweise nach einer Behandlungsstrecke, die einer Sättigungslänge des Filterkörpers 2 entspricht, wobei die Sättigungslänge derjenigen von dem Gas durchströmten Strecke entspricht, nach der - in Strömungsrichtung 1 betrachtet - im Katalysator des Filterkörpers 2 eine Sättigung der Schadstoffverringerung, insbesondere der Reduktion von Stickoxiden eintritt.

In Figur 2 ist ein weiteres Ausführungsbeispiel einer Reinigungsanlage dargestellt, wobei auch hier zur Vermeidung von überflüssigen Wiederholungen, nur auf die Unterschiede zwischen diesem Ausführungsbeispiel und denjenigen nach den Figuren 1 und 2 eingegangen wird.

In dem Ausführungsbeispiel gemäß Figur 2 ist der Filterkörper 2 in der Art einer Filterkaskade dreigeteilt ausgebildet. Die von dem Abgas durchströmbaren und porös ausgebildeten Teilkörper 7, 7', 7'' des Filterkörpers 2 sind räumlich voneinander beabstandet und in Strömungsrichtung 1 des Abgases hintereinander angeordnet. Die in Strömungsrichtung 1 gemessene Länge eines Teilkörpers 7, 7', 7'' entspricht sinnvollerweise der Sättigungslänge des Katalysators des Filterkörpers 2.

In den zwischen den Teilkörpern 7, 7', 7'' des Filterkörpers 2 angeordneten Zwischenräumen 8, 8' sind Düsen 5 und 6 angeordnet, die der Zuführeinrichtung zugeordnet sind. Aus den Düsen - in dem ersten Zwischenraum eine randseitig angeordnete und radial nach innen ausströmende Ringdüse 6 und in dem zweiten Zwischenraum 8' eine mittig angeordnete Zerstäuberdüse 5, strömt das Reduktionsmittel in den jeweiligen Zwischenraum 8, 8' ein und vermischt sich mit dem bereits teilgereinigten Abgas. Ein Zwischenraum 8, 8' kann daher als eine Art Mischkammer aufgefaßt werden. Das in einem Zwischenraum 8, 8' mit Reduktionsmittel angereicherte Abgas wird dann dem nächsten Teilkörper 7' bzw. 7'' zur weiteren Verringerung von Schadstoffen zugeführt.

In allen Ausführungsbeispielen ist der Katalysator sinnvollerweise ein Cu-imprägnierter Cu Al₂O₄- Spinell, wobei unter Spinellen ein Material der allgemeinen chemischen Formel AₐB_{b}O₄ zu verstehen ist, das zumindest mikroskopisch eine kristallographische oder kristallähnliche kubische Gitterstruktur mit flächenzentriert angeordneten Sauerstoffionen und tetraedrischen und oktaedrischen Lücken aufweist, in welchen tetraedrischen Lücken die A-Teilchen und bis zu 50% der B-Teilchen und in welchen oktaedrischen Lücken die restlichen B-Teilchen angeordnet sind. Hier bezeichnet ein A-bzw. B-Teilchen nur deren kristallographische Anordnung. Im Sinne der Erfindung sind als Spinelle auch unterstöchiometrische Verbindungen anzusehen, bei denen das B_{b}O₃ als Matrix fungiert und die im Röntgenspektrum die charakterischtischen Spinelllinien aufweisen, wobei der Spinell der formalen Zusammensetzung AₐB_{b}O₄ in einer B_{b}O₃ Matrix vorliegt, so daß sich formal eine Stöchiometrie von Aₐ(1-x)B_{b}O₄ ergibt. In stofflicher Hinsicht können die A-, wie auch die B-Teilchen unterschiedlich zueinander sein.

Des weiteren hat es sich als günstig erwiesen, diese Spinelle mit katalytisch aktiven Elemente Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide zu versehen.

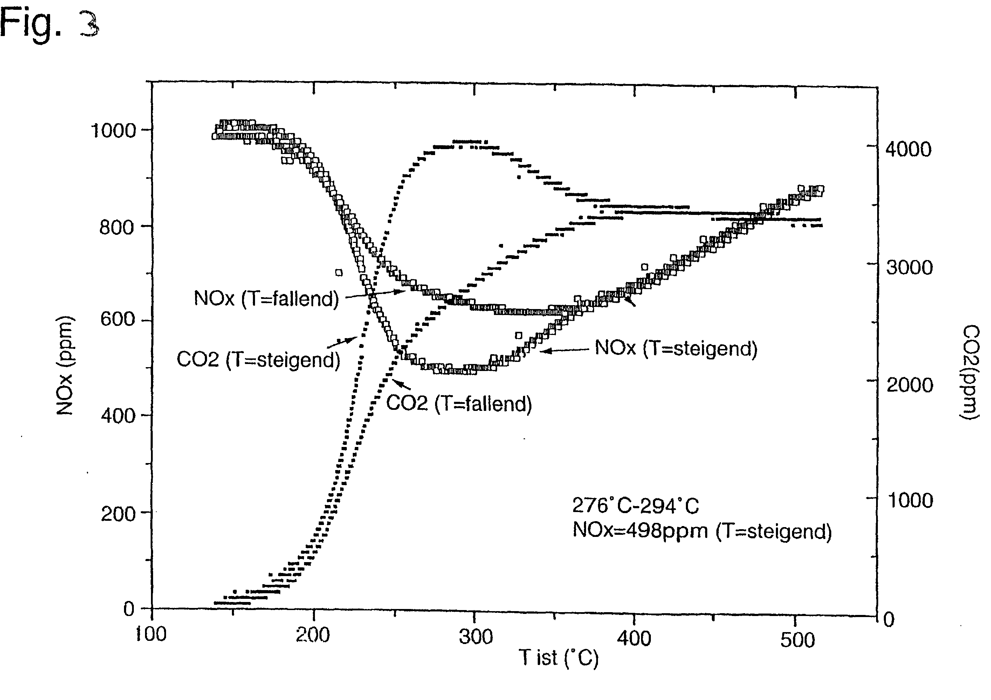

In Figur 3 ist anhand eines mit Kupfer imprägnierten CuAl₂O₄ - Spinells beispielhaft für die eben aufgelisteten Spinelle ein NOx/CO₂-Diagramm in Abhängigkeit der Temperatur dargestellt. Die Messung erfolgte sowohl bei zunehmender als auch bei abnehmender Temperatur, wobei die Umsetzung hinsichtlich CO und NOx eine Hysterese aufweist.

Zur Durchführung dieser Messung wurden 10 Gramm Split des Cuimprägnierten CuAl₂O₄ -Spinells in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe betrug etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wurde ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wurde die NO-Konzentration mit einem Gasdetektor gemessen, wobei vor der Detektion eventuell gebildetes NO₂ in einem Konverter zu dem Stickoxid NO reduziert wurde. Simultan wurde eine Oxidation von Kohlenwasserstoffen zu CO₂ durch Messung des CO₂-Gehalts durch den Gasdetektor beobachtet.

Das Ergebnis der Messung des Spinells ist in dem Diagramm gemäß Figur 3 dargestellt. Der Verlauf des NO- und des CO₂-Anteiles in ppm ist als Funktion der Temperatur aufgetragen, wobei die NOx-Konzentration (leere Quadrate) und die CO₂-Konzentration (volle Rechtecke) unterschiedlich gekennzeichnet sind. In dem Diagramm ist eine deutliche Abnahme der NOx(NO)-Konzentration mit zunehmender Temperatur erkennbar, die zwischen ca. 276 bis 294°C einen Tiefpunkt erreicht und anschließend wieder ansteigt. Für das Cu imprägnierten CuAl₂O₄ wird ab ca. 200 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx vorliegt, beträgt je nach Zusammensetzung des Materials zwischen 200 °C und 400 °C.

Günstigerweise liegt das angegebene Temperaturintervall bei etwa den Temperaturen, die in einem Abgasstrang eines Auspuffes einer Brennkraftmaschine auftreten können.

Da dieser CuAl₂O₄ -Spinell bereits bei relativ niedrigen Temperaturen ein gutes Ansprechverhalten aufweist, ist er insbesondere zum Einsatz als NOx-Abgaskatalysator bei Brennkraftmaschinen und hierbei vorzugsweise von Dieselmotoren geeignet ist.

Weitere Untersuchungen an diesem Katalysator ergaben eine hohe Beständigkeit gegenüber NOx, H₂O, CO₂ und H₂O.

## Patentansprüche

1. Verfahren zum Betreiben einer Reinigungsvorrichtung für strömende Abgasen von Dieselmotoren bei Temperaturen zwischen 200 °C und 400 °C,
- bei welchem Verfahren ein fluidisch durchströmbarer und aus einem Katalysator gefertigter Filterkörper (2) dem Gasstrom ausgesetzt wird,
- wobei als Katalysator ein Cu-imprägnierter CuAl₂O₄-Spinell gewählt wird,
- bei welchem Verfahren dem Abgas vor dem Eintritt in den Katalysator als Reduktionsmittel Kohlenwasserstoff beigegeben wird, und
- bei welchem Verfahren dem strömenden Gas - in Strömungsrichtung des Gases betrachtet - nach einer bestimmten von dem zu reinigenden Gas in dem Katalysator des Filterkörpers (2) durchströmten Behandlungsstrecke erneut Kohlenwasserstoff zugegeben und der Kontakt mit dem Katalysator des Filterkörpers (2) aufrechterhalten wird.

2. Verfahren nach Anspruch 1,
**dadurch gekennzeichnet,**
**daß** das Reduktionsmittel in flüssiger Tropfenform zuströmseitig auf den Filterkörper (2) zubewegt wird, daß von den Tropfen volumengeringere Tropfen in flüssiger Form in den Filterkörper (2) hinein transportiert werden und daß die Tropfen vollständig erst innerhalb des Filterkörpers (2) verdampft werden.

3. Reinigungsvorrichtung zur Durchführung eines Verfahrens nach Anspruch 1,
- welche Reinigungsvorrichtung einen im Gasstrom angeordneten und durchströmbaren Filterkörper (2) aufweist,
- welcher Filterkörper (2) aus einem Katalysator gefertigt ist,
- welcher Katalysator einen Cu- imprägnierten CuAl₂O₄-Spinell aufweist,
- welche Reinigungsvorrichtung eine erste Zuführeinreichtung vor dem Katalysator für als Reduktionsmittel verwendeten Kohlenwasserstoff sowie
- eine zweite Zuführeinrichtung für Kohlenwasserstoff, welche nach einer bestimmten von dem zu reinigenden Gas in dem Katalysator des Filterkörpers (2) durchströmten Behandlungsstrecke angeordnet ist, aufweist.

4. Reinigungsvorrichtung gemäß Anspruch 3,
**dadurch gekennzeichnet,**
**daß** die Behandlungsstrecke eine einer Sättigungslänge des Filterkörpers (2) entsprechende Strecke ist, die derjenigen von dem Gas durchströmten Strecke entspricht, nach der - in Strömungsrichtung (1) betrachtet - im Katalysator des Filterkörpers (2) eine Sättigung der Reduktion von Stickoxiden eintritt.

5. Reinigungsvorrichtung gemäß Anspruch 3,
**dadurch gekennzeichnet,**
**daß** in dem Filterkörper (2) ein insbesondere gaszuströmseitig zuströmseitig verschlossener Beigabekanal (3) für das Reduktionsmittel integriert ist, der mit einem Durchströmkanal (4) des Gases durch den Filterkörper (2) zumindest bereichsweise fluidisch verbunden ist.

6. Reinigungsvorrichtung gemäß Anspruch 3,
**dadurch gekennzeichnet,**
**daß** der Filterkörper (2) zwischen einem Durchströmkanal (4) und einem Beigabekanal (3) zumindest bereichsweise in Richtung des Durchströmkanals (4) kapillarwirksame, insbesondere porös ausgebildet ist.

7. Reinigungsvorrichtung gemäß Anspruch 3,
**dadurch gekennzeichnet,**
**daß** eine Zuführeinrichtung eine gaszuströmseitig vor dem Katalysator angeordnete Zerstäuberdüse (5) aufweist, die Tropfen einer solchen Größe erzeugt, daß ein Tropfen erst nach einer bestimmten Eindringtiefe, die zumindest in etwa der Sättigungslänge entspricht, in dem Filterkörper (2) vollständig verdampft ist.

8. Reinigungsvorrichtung gemäß Anspruch 3,
**dadurch gekennzeichnet,**
**daß** eine Zuführeinrichtung im Bereich des Filterkörpers (2) angeordnete Düsen (5, 6) aufweist, durch die das Reduktionsmittel ausströmbar ist.

9. Reinigungsvorrichtung gemäß Anspruch 3,
**dadurch gekennzeichnet,**
**daß** eine Zuführeinrichtung umfangsseitig am Filterkörper (2) angeordnete Düsen, insbesondere eine Ringdüse (6) aufweist.

10. Reinigungsvorrichtung gemäß Anspruch 3,
**dadurch gekennzeichnet,**
**daß** der Filterkörper (2) zumindest zwei räumlich getrennte und strömungsseitig hintereinander angeordnete Teilkörper (7, 7', 7'') aufweist, und daß eine Zuführeinrichtung in dem Zwischenraum (8, 8') zwischen den Teilkörpern (7, 7', 7'') Zuströmöffnungen für das Reduziermittel aufweist.

11. Reinigungsvorrichtung gemäß Anspruch 3,
**dadurch gekennzeichnet,**
**daß** der Filterkörper (2) zumindest ein katalytisch wirksames Element wie Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide aufweist.

## Claims

1. Method for the operation of a purification unit for flowing exhaust gases at temperatures between 200° and 400°C,
- in which method a filter element (2) made from a catalyst and through which fluidic flow can take place is exposed to the gas stream,
- the catalyst chosen being a Cu-impregnated CuAl₂O₄ spinel,
- in which method hydrocarbon is added to the exhaust gas as a reducing medium before it enters the catalyst, and
- in which method, when the gas to be purified has flowed - viewed in the flow direction of the gas - through a certain treatment distance in the catalyst of the filter element (2), hydrocarbon is again added to the flowing gas and contact with the catalyst of the filter element (2) is maintained.

2. Method according to Claim 1,
**characterised in that**
the reducing medium is fed into the filter element (2) on the inflow side in the form of liquid drops, droplets of smaller volume than the drops are transported in liquid from into the filter element (2), and the droplets only vaporise completely within the filter element (2).

3. Purification unit for implementing the method according to Claim 1,
**characterised in that**
- the said purification unit comprising a filter element (2) arranged in the gas stream, through which flow can take place,
- the said filter element (2) being made from a catalyst,
- the said purification unit comprises ahead of the catalyst a feed device for hydrocarbon used as the reducing medium, and
- it also comprises a second feed device for hydrocarbon, which is arranged after the gas to be purified has flowed a certain treatment distance through the catalyst of the filter element (2).

4. Purification unit according to Claim 3,
**characterised in that**
the treatment distance is a distance corresponding to a saturation length of the filter element (2), which corresponds to the distance - viewed in the flow direction (1) - through which the gas has flowed in the catalyst of the filter element (2) when saturation occurs with respect to the reduction of nitrogen oxides.

5. Purification unit according to Claim 3,
**characterised in that**
in the filter element (2) is integrated, in particular on the gas inlet side, a feed duct (3) for the reducing medium which is closed on the side towards which it flows, the said duct being in fluidic connection with a flow channel (4) of the gas through the filter element (2), at least in part.

6. Purification unit according to Claim 3,
**characterised in that**
between a flow channel (4) and a feed duct (3), at least in part, the filter element (2) is capillary-active towards the flow channel (4), in particular being of porous structure.

7. Purification unit according to Claim 3,
**characterised in that**
a feed device comprises an atomising nozzle (5) arranged on the gas inlet side before the catalyst, which produces droplets of such a size that the droplets only vaporise completely after a certain penetration depth into the filter element (2), this depth corresponding at least approximately to the saturation length.

8. Purification unit according to Claim 3,
**characterised in that**
a feed device comprises nozzles (5, 6) arranged in the area of the filter element (2), out of which the reducing medium can flow.

9. Purification unit according to Claim 3,
**characterised in that**
a feed device comprises nozzles arranged circumferentially on the filter element (2), in particular an annular nozzle (6),

10. Purification unit according to Claim 3,
**characterised in that**
the filter element (2) comprises at least two spatially separated part-elements (7, 7', 7") arranged one after another in the flow direction, and a feed device comprises inflow openings for the reducing medium in the intermediate spaces (8, 8') between the part-elements (7, 7', 7").

11. Purification unit according to Claim 3,
**characterised in that**
the filter element (2) comprises at least one catalytically effective element such as palladium, platinum, rhodium, ruthenium, osmium, iridium, rhenium and/or rare-earth elements such as lanthanum and cerium, vanadium, titanium, niobium, molybdenum, tungsten and/or their salts and/or their oxides.

## Revendications

1. Procédé pour l'exploitation d'un dispositif de purification de gaz d'échappement en écoulement de moteurs diesel à des températures de 200 à 400°C,
- procédé dans lequel un corps de filtre (2), pouvant être traversé par un fluide et constitué d'un catalyseur, est exposé au courant gazeux,
- on choisit en tant que catalyseur un spinelle de CuAl₂O₄ imprégnée de Cu,
- procédé dans lequel on ajoute au gaz d'échappement, avant qu'il ne pénètre dans le catalyseur, un hydrocarbure servant d'agent réducteur, et
- procédé dans lequel on ajoute de nouveau un hydrocarbure au gaz en écoulement - quand on regarde dans le sens d'écoulement du gaz - en aval d'une zone de traitement, traversée par le gaz devant être purifié, dans le catalyseur du corps de filtre (2), et le contact avec le catalyseur du corps de filtre (2) est maintenu.

2. Procédé selon la revendication 1, **caractérisé en ce que** l'agent réducteur est, sous forme de gouttes liquides, amené côté admission sur le corps de filtre (2) que, parmi les gouttes, les gouttes ayant un plus petit volume sont transportées sous forme liquide dans le corps de filtre (2) et que les gouttes ne sont entièrement évaporées qu'à l'intérieur du corps de filtre (2).

3. Dispositif de purification pour mettre en oeuvre un procédé selon la revendication 1,
- lequel dispositif de purification comporte un corps de filtre (2), disposé dans le courant gazeux et pouvant être traversé par ce dernier,
- lequel corps de filtre (2) est fabriqué à partir d'un catalyseur,
- lequel catalyseur comprend un spinelle de CuAl₂O₄ imprégnée de Cu,
- lequel dispositif de purification comporte en outre un premier dispositif d'admission, en amont du catalyseur, pour un hydrocarbure utilisé en tant qu'agent réducteur,
- ainsi qu'un deuxième dispositif d'admission d'un hydrocarbure, qui est disposé en aval d'une certaine zone de traitement, traversée par le gaz devant être purifié, dans le catalyseur du corps de filtre (2).

4. Dispositif de purification selon la revendication, **caractérisé en ce que** la zone de traitement est une zone correspondant à une longueur de saturation du corps de filtre (2), qui correspond à celle de la zone traversée par le gaz, en aval de laquelle, quand on regarde dans le sens de l'écoulement (1), une saturation de la réduction des oxydes d'azote a lieu dans le catalyseur du corps de filtre (2).

5. Dispositif de purification selon la revendication 3, **caractérisé en ce qu'**un canal (3), destiné à l'amenée de l'agent réducteur, et obturé côté admission, en particulier côté admission des gaz, est intégré dans le corps de filtre (2), canal qui, au moins par zones, est en communication fluidique avec un canal de passage (4) du gaz à travers le corps de filtre (2).

6. Dispositif de purification selon la revendication 3, **caractérisé en ce que** le corps de filtre (2), entre un canal de passage (4) et un canal d'amenée (3), est, au moins par zones, réalisé, dans la direction du canal de passage (4), avec un effet de capillarité, et en particulier poreux.

7. Dispositif de purification selon la revendication 3, **caractérisé en ce qu'**un dispositif d'amenée comporte une buse de pulvérisation (5), disposée côté admission des gaz en amont du catalyseur, buse qui produit des gouttes ayant une taille telle qu'une goutte ne soit entièrement évaporée dans le corps de filtre (2) qu'après une certaine profondeur de pénétration qui correspond au moins approximativement à la longueur de saturation.

8. Dispositif de purification selon la revendication 3, **caractérisé en ce qu'**un dispositif d'amenée comporte des buses (5, 6), disposées dans la zone du corps de filtre (2), par lesquelles l'agent réducteur peut être évacué.

9. Dispositif de purification selon la revendication 3, **caractérisé en ce qu'**un dispositif d'amenée comporte des buses disposées sur la périphérie du corps de filtre (2), en particulier une buse annulaire (6).

10. Dispositif de purification selon la revendication 3, **caractérisé en ce que** le corps de filtre (2) comporte au moins deux corps partiels (7, 7', 7") séparés spatialement et disposés côté écoulement l'un en aval de l'autre, et **en ce qu'**un dispositif d'amenée, disposé dans l'espace intermédiaire (8, 8') situé entre les corps partiels (7, 7', 7"), présente des ouvertures d'amenée pour l'agent réducteur.

11. Dispositif de purification selon la revendication 3, **caractérisé en ce que** le corps de filtre (2) comporte au moins un élément catalytiquement actif tel que le palladium, le platine, le rhodium, le ruthénium, l'osmium, l'iridium, le rhénium, et/ou des terres rares telles que le lanthane et le cérium, le vanadium, le titane, le niobium, le molybdène, le tungstène et/ou leurs sels et/ou leurs oxydes.
